# EUROPEAN PATENT APPLICATION

(11) **EP 3 993 237 A1**
(43) Date of publication of application: **04.05.2022**
(21) Application number: 19942909.3
(22) Date of filing: 27.08.2019
(51) Int. Cl.: H02K 7/09, F16C 32/04

(54) **ELECTRIC MAGNETIC MOTOR**

(71) Applicant: Lee, Shou-Hsun, 70464 Tainan City (TW); Li, Chun-I, 70464 Tainan City (TW)
(72) Inventor: Lee, Shou-Hsun, 70464 Tainan City (TW); Li, Chun-I, 70464 Tainan City (TW)
(74) Representative: Morris, Jonathan Paul
(86) International application number: PCT/CN2019/102685
(87) International publication number: WO 2021/035504

(57) **Abstract**

An electric magnetic motor comprises a motor; a rotating shaft which is connected to the motor; a rotating device including a rotating disk and a plurality of magnetic members, the rotating disk being kinetically connected to the motor through the rotating shaft, wherein the plurality of magnetic members are annularly arranged at an outer periphery of the rotating disk, each magnetic member is arranged in a manner that a magnetic moment direction thereof is magnetic diverging from a radial direction of the rotating disk; and a fixed ring, including a plurality of corresponding magnetic members, the plurality of corresponding magnetic members being annularly arranged on the fixed ring in a manner that a magnetic repulsion reaction is generated between the corresponding magnetic members and the magnetic members.

## Description

### FIELD OF THE INVENTION

The present invention relates to a motor, and more particularly relates to an electric magnetic motor that utilizes magnetism.

### BACKGROUND OF THE INVENTION

A motor is a device that converts electrical energy into kinetic energy in output shaft. Due to friction caused between the output shaft and other objects, some kinetic energy is lost. If the kinetic energy loss in the output shaft can be reduced, the electric energy performance of the motor can be improved.

### SUMMARY OF THE INVENTION

Accordingly, one objective of the present invention is to provide an electric magnetic motor which greatly reduces kinetic energy loss in the output shaft to save operating power required.

In order to overcome the technical problems in prior art, the present invention provides an electric magnetic motor, comprising: a motor; a rotating shaft which is laterally connected to the motor; a rotating device including a rotating disk and a plurality of magnetic members, the rotating disk being laterally run through by and connected with the rotating shaft in a manner that the rotating disk and the rotating shaft are coaxial, the rotating disk being kinetically connected to the motor through the rotating shaft such that the motor is powered by receiving electricity to rotate the rotating shaft so as to drive the rotating device, wherein the plurality of magnetic members are annularly arranged at an outer periphery of the rotating disk, each magnetic member is arranged in a manner that a magnetic moment direction of each magnetic member is magnetic diverging in a magnetic moment diverging angle from a radial direction of the rotating disk; and a fixed ring, the fixed ring neighboring to one rotating disk and arranged at an outer periphery of said one rotating disk, the fixed ring including a plurality of corresponding magnetic members, the corresponding magnetic members of the neighboring fixed rings in the same lateral line being interleaved arranged, the plurality of corresponding magnetic members being annularly arranged on the inner peripheral surface of each fixed ring in a manner that each corresponding magnetic member face toward the rotating disk to generate a magnetic repulsion reaction between the corresponding magnetic members and the magnetic members when one corresponding magnetic member and one magnetic member get close to each other such that a repulsing magnetic force is generated between the corresponding magnetic members and the magnetic members.

In one embodiment of the present invention, there are more than one rotating disks, each fixed ring neighbors to one rotating disk and arranged at an outer periphery of said one rotating disk.

In one embodiment of the present invention, the magnetic members of the neighboring rotating disks in the same lateral line are interleaved arranged.

In one embodiment of the present invention, the corresponding magnetic members of the fixed rings in the same lateral line are interleaved arranged.

In one embodiment of the present invention, the magnetic moment diverging angle is 45 degree.

In one embodiment of the present invention, when one corresponding magnetic member and one magnetic member get close to each other, a south pole of said one corresponding magnetic member and a south pole of said one magnetic member generate repulsing magnetic forces to each other.

With the technical means adopted by the present invention, each rotating disk is provided with the magnetic members, and each fixed ring is provided with the corresponding magnetic members. A repulsing magnetic force is generated between each magnetic member and at least one corresponding magnetic member, and thus the rotating shaft is supported by the repulsing magnetic force. In addition, the magnetic members and the corresponding magnetic members are respectively interleaved arranged, the rotating performance is improved. Unlike mechanical bearing, the present application is with merits that, since no friction occurs, the electric magnetic motor has low kinetic energy loss characteristic, and reduces operating power required.

### BRIEF DESCRIPTION OF THE DRAWINGS

FIG. 1 is a schematic diagram illustrating an electric magnetic motor according to one embodiment of the present invention;
FIG. 2 is a schematic front view illustrating an interior of a rotating device and the corresponding fixed ring in the electric magnetic motor according to the embodiment of the present invention;
FIG. 3 is a schematic front view illustrating the neighboring rotating devices and the neighboring fixed rings in the electric magnetic motor according to the embodiment of the present invention.

### DETAILED DESCRIPTION OF THE PREFERRED EMBODIMENTS

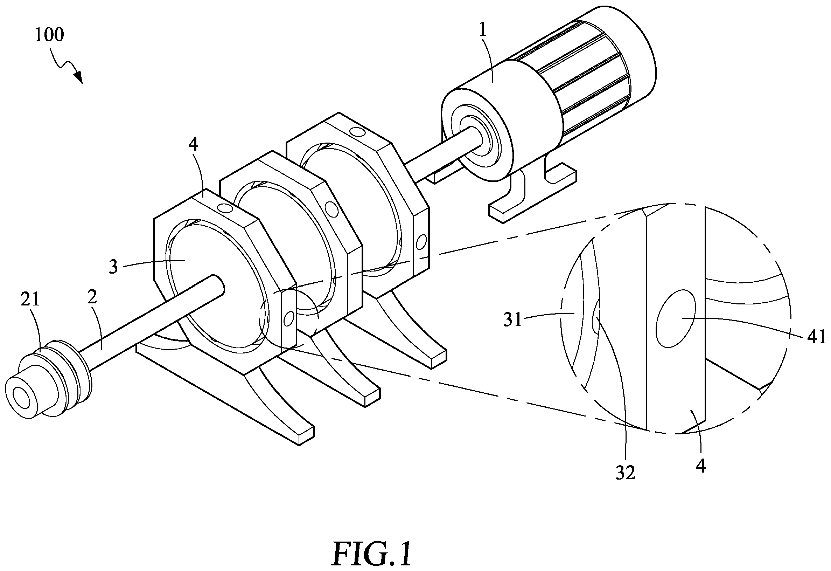

The preferred embodiments of the present invention are described in detail below with reference to FIG. 1 to FIG. 3. The description is used for explaining the embodiments of the present invention only, but not for limiting the scope of the claims.

As shown in FIG. 1 to FIG. 2, an electric magnetic motor 100 according to one embodiment of the present invention includes: a motor 1; a rotating shaft 2, which is connected to the motor 1; a rotating device 3 including a rotating disk 31 and a plurality of magnetic members 32, the rotating disk 31 being connected with the rotating shaft 2 in a manner that the rotating disk 31 and the rotating shaft 2 are coaxial, the rotating disk 31 being kinetically connected to the motor 1 through the rotating shaft 2 such that the motor 1 is powered by receiving electricity to rotate the rotating shaft 2 so as to drive the rotating device 3, wherein the plurality of magnetic members 32 are annularly arranged at an outer periphery of the rotating disk 31, each magnetic member 32 is arranged in a manner that a magnetic moment direction of each magnetic member 32 is magnetic diverging in a magnetic moment diverging angle θ1 from a radial direction of the rotating disk 31; and a fixed ring 4, the fixed ring 4 neighboring to the rotating disk 31 and arranged at an outer periphery of said rotating disk 31, the fixed ring 4 including a plurality of corresponding magnetic members 41, the plurality of corresponding magnetic members 41 being annularly arranged on the inner peripheral surface of the fixed ring 4 in a manner that each corresponding magnetic member 41 faces toward the rotating disk 31 to generate a repulsing magnetic force between the corresponding magnetic members 41 and the magnetic members 32.

In the present embodiment, the rotating shaft 2 is provided with a shaft coupling member 21. The shaft coupling member 21 is a belt pulley and is connected with another shaft non-coaxial thereto by a belt. In other embodiment, the shaft coupling member 21 also can be a gear or a sprocket, both of which are served as a transmission to rotate another shaft. Alternatively, the rotating shaft 2 is not provided with the shaft coupling member 21 and is served as a rotating shaft that is directly connected to the load. For example, the rotating shaft 2 can be directly connected to a fan blade.

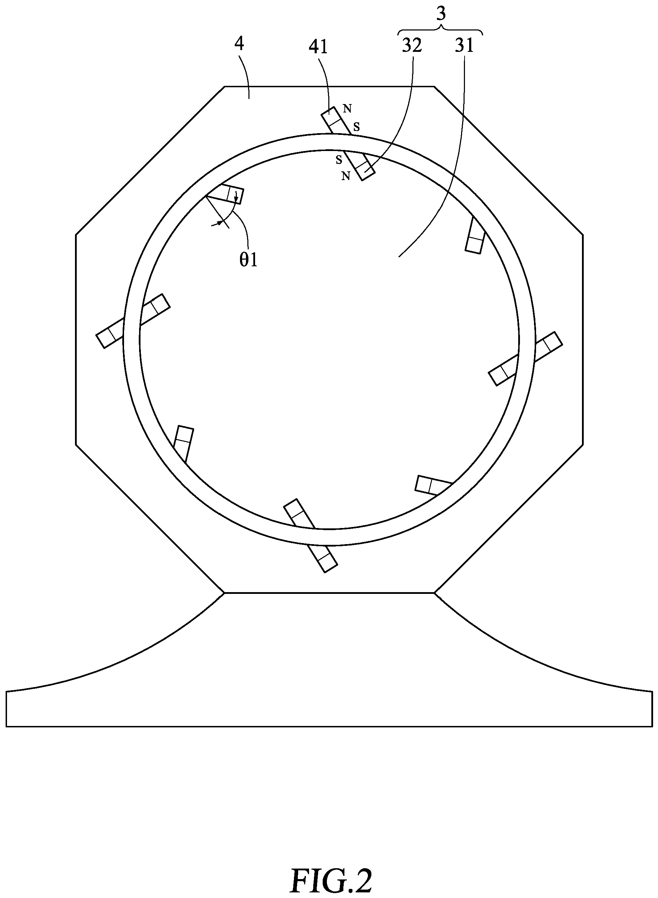

As shown in FIG. 2, an outer periphery of the rotating disks 31 of the rotating devices 3 is provided with slots spaced at equal included angles relative to the center of the rotating disks 31 to accommodate the corresponding magnetic members 41. In the present embodiment, the included angles between the corresponding magnetic members 41 are twice the included angles between the magnetic members 32. In other words, the number of the magnetic members 32 is twice the number of the corresponding magnetic members 41. Each rotating disk 31 is provided with four corresponding magnetic members 41 and eight magnetic members 32. It goes without saying that the numbers of the magnetic members 32 and corresponding magnetic members 41 are not limited to this. The magnetic members 32 and corresponding magnetic members 41 are permanent magnets. In the present embodiment, the magnetic members 32 and the corresponding magnetic members 41 are cylindrical. A magnet moment direction of one magnetic member 32 is parallel to a longitudinal direction of said one magnetic member 32. And a magnet moment direction of one corresponding magnetic member 41 is parallel to a longitudinal direction of said one corresponding magnetic member 41. The magnet moment directions of the magnetic members 32 and the corresponding magnetic members 41 are aligned with a radial plane of the rotating disks 31 and diverge in a magnetic moment diverging angle θ1 from the radial direction of rotating disk uniformly clockwise or uniformly counterclockwise. In this embodiment, viewing in a direction from the motor 1 to the rotating devices 3, the magnet moment directions of the magnetic members 32 and the corresponding magnetic members 41 diverge from the radial direction of rotating disk counterclockwise. The magnetic moment diverging angle θ1 is 45 degree. It goes without saying that the magnetic moment diverging angle θ1 can be a non-zero and non-right-angle degree. The magnetic members 32 and the corresponding magnetic members 41 can be button-shaped or otherwise.

As shown in FIG. 2, sides of the magnetic members 32 facing outwards are south poles. Sides of the corresponding magnetic members 41 facing inwards are south poles. In other words, the polarity of the nearer sides of the magnetic members 32 and the corresponding magnetic members 41 are the same. A repulsing magnetic force is generated between each magnetic member 32 and at least one corresponding magnetic member 41. The electric magnetic motor 100 of present invention supports the rotating shaft 2 in a contactless manner of the magnetic members 32 and the corresponding magnetic members 41 by the repulsing magnetic force. Unlike mechanical bearings, the present application is with merits that, since no friction occurs, the electric magnetic motor 100 has low kinetic energy loss characteristic, and reduces the operating power required. In another embodiment, when one magnetic member 32 and one corresponding magnetic member 41 get close to each other, a north pole of said one magnetic member 32 and a north pole of said one corresponding magnetic member 41 generate repulsing magnetic force to each other.

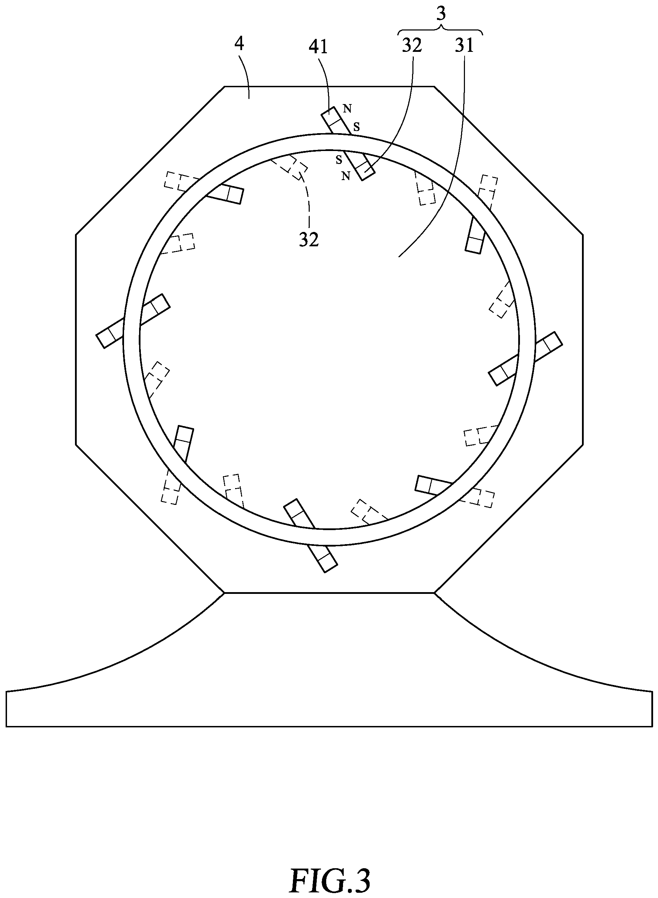

In this embodiment, there are three rotating disks 31, which are spaced apart from each other. There are also three fixed rings 4, which correspondingly disposed at an outer periphery of the three rotating disks 31. The more magnetic members 32 of the rotating disk 31 and the corresponding magnetic members 41 of the fixed ring 4 are, the greater the effect of the magnetic repulsion reaction is. The magnetic members 32 of the neighboring rotating disks 31 in the same lateral line are interleaved arranged. As shown in FIG. 3, the magnetic members 32 shown in solid line and the magnetic members 32 shown in dashed line are respectively disposed on the neighboring rotating disks 31. In comparison with the magnetic members 32 of the neighboring rotating disks 31 arranged to be stacked in the same lateral line, the magnetic members 32 of this embodiment enable the distance between the magnetic members 32 between the rotating disks 31 to be greater and thus the magnetic field interference is lower.

Similarly, the corresponding magnetic members 41 of the neighboring fixed rings 4 in the same lateral line being interleaved arranged. As shown in FIG. 3, the corresponding magnetic members 41 shown in solid line and the corresponding magnetic members 41 shown in dashed line are respectively disposed on the neighboring fixed rings 4. In comparison with the corresponding magnetic members 41 of the neighboring fixed ring 4 arranged to be stacked in the same lateral line, the corresponding magnetic members 41 of this embodiment enable the distance between the corresponding magnetic members 41 between the fixed rings 4 to be greater and thus the magnetic field interference is lower.

## Claims

1. An electric magnetic motor (100), **characterised in that** the electric magnetic motor (100) comprising:
a motor (1);
a rotating shaft (2) which is laterally connected to the motor (1);
a rotating device (3) including a plurality of rotating disks (31) and a plurality of magnetic members (32), the plurality of rotating disks (31) being laterally run through by and connected with the rotating shaft (2) in a manner that each rotating disk (31) and the rotating shaft (2) are coaxial, the plurality of rotating disks (31) being kinetically connected to the motor (1) through the rotating shaft (2) such that the motor (1) is powered by receiving electricity to rotate the rotating shaft (2) so as to drive the rotating device (3), wherein the plurality of magnetic members (32) are annularly arranged at an outer periphery of each rotating disk (31), each magnetic member (32) is arranged in a manner that a magnetic moment direction of each magnetic member (32) is magnetic diverging in a magnetic moment diverging angle (θ1) from a radial direction of each rotating disk (31), and the magnetic members (32) of the neighboring rotating disks (31) in the same lateral line are interleaved arranged; and
a plurality of fixed rings (4), each of the fixed rings (4) neighboring to one rotating disk (31) and arranged at an outer periphery of said one rotating disk (31), each fixed ring (4) including a plurality of corresponding magnetic members (41), the corresponding magnetic members (4) of the neighboring fixed rings (4) in the same lateral line being interleaved arranged, the plurality of corresponding magnetic members (41) being annularly arranged on the inner peripheral surface of each fixed ring (4) in a manner that each corresponding magnetic member (41) face toward the rotating disk (31) to generate a magnetic repulsion reaction between the corresponding magnetic members (41) and the magnetic member (32) when one corresponding magnetic member (41) and one magnetic member (32) get close to each other such that a repulsing magnetic force is generated between the corresponding magnetic members (41) and the magnetic members (32).

2. The electric magnetic motor (100) as claimed in claim 1, wherein the magnetic moment diverging angle (θ1) is 45 degree.

3. The electric magnetic motor (100) as claimed in claim 1, wherein when one corresponding magnetic member (41) and one magnetic member (32) get close to each other, a south pole of said one corresponding magnetic member (41) and a south pole of said one magnetic member (32) generate repulsing magnetic force to each other.
